# EUROPEAN PATENT SPECIFICATION

(11) **EP 3 798 968 B1**
(45) Date of publication and mention of the grant of the patent: **03.07.2024**
(21) Application number: 19814071.7
(22) Date of filing: 29.03.2019
(51) Int. Cl.: G06T 5/50, G06T 7/11, G06T 5/70, H04N 13/111, H04N 13/271, H04N 23/80

(54) **IMAGE PROCESSING METHOD AND DEVICE, ELECTRONIC DEVICE, COMPUTER APPARATUS, AND STORAGE MEDIUM**
BILDVERARBEITUNGSVERFAHREN UND -VORRICHTUNG, ELEKTRONISCHE VORRICHTUNG, COMPUTERVORRICHTUNG UND SPEICHERMEDIUM
PROCÉDÉ ET DISPOSITIF DE TRAITEMENT D'IMAGES, DISPOSITIF ÉLECTRONIQUE, APPAREIL INFORMATIQUE ET SUPPORT D'INFORMATIONS

(30) Priority: 06.06.2018 CN 201810574247; 06.06.2018 CN 201810574774
(43) Date of publication of application: 31.03.2021
(73) Proprietor: GUANGDONG OPPO MOBILE TELECOMMUNICATIONS CORP., LTD., Dongguan Guangdong 523860 (CN)
(72) Inventor: ZHANG, Xueyong, Dongguan, Guangdong 523860 (CN)
(74) Representative: Manitz Finsterwald Patent- und Rechtsanwaltspartnerschaft mbB
(86) International application number: PCT/CN2019/080517
(87) International publication number: WO 2019/233169

(56) References cited:
- EP-A1- 2 328 125
- CN-A- 105 530 503
- CN-A- 105 530 503
- CN-A- 106 683 071
- CN-A- 106 683 071
- CN-A- 106 993 112
- CN-A- 107 610 046
- CN-A- 107 610 046
- CN-A- 108 777 784
- CN-A- 108 777 784
- CN-A- 108 777 784
- CN-A- 108 830 785
- US-B2- 9 529 424
- QI ZHI ET AL: "Toward Dynamic Image Mosaic Generation With Robustness to Parallax", IEEE TRANSACTIONS ON IMAGE PROCESSING, IEE SERVICE CENTER , PISCATAWAY , NJ, US, vol. 21, no. 1, January 2012 (2012-01), pages 366-378, XP011390282, ISSN: 1057-7149, DOI: 10.1109/TIP.2011.2162743

## Description

### TECHNICAL FIELD

The present disclosure generally relates to the technical field of image-processing, and in particular to an image-processing method and apparatus, an electronic device, a non-transitory computer-readable storage medium, and a computing device.

### BACKGROUND

When a depth image and a color image are synthetized into a three-dimensional image, since the depth image and the color image may be acquired by cameras with different field-of-views (FOVs), the FOV for the depth image does not completely overlap with that for the color image. Then, a part of region in the color image lacks of depth information, which makes it impossible to synthesize a three-dimensional image of the region.

"Toward Dynamic Image Mosaic Generation With Robustness to Parallax" written by Qi Zhi and Jeremy R. Cooperstock discloses a mosaicing method as follows: mosaicing is largely dependent on the quality of registration among the constituent input images. Parallax and object motion present challenges to image registration, leading to artifacts in the result. To reduce the impact of these artifacts, traditional image mosaicing approaches often impose planar scene constraints or rely on purely rotational camera motion or dense sampling. However, these requirements are often impractical or fail to address the needs of all applications. Instead, taking advantage of depth cues and a smooth transition criterion, we achieve significantly improved mosaicing results for static scenes, coping effectively with nontrivial parallax in the input. We extend this approach to the synthesis of dynamic video mosaics, incorporating foreground/background segmentation and a consistent motion perception criterion. Although further additions are required to cope with unconstrained object motion, our algorithm can synthesize a perceptually convincing output, conveying the same appearance of motion as seen in the input sequences.

### SUMMARY OF THE DISCLOSURE

The invention is defined by the independent claims. Embodiments of the present disclosure provide an image-processing method and apparatus, and an electronic device.

An image-processing method may be used in an electronic device, the electronic device includes a visible-light camera and a depth camera, a field-of-view (FOV) of the visible-light camera is partially overlapped with a FOV of the depth camera, the visible-light camera is configured for capturing a visible-light image, the depth camera is configured for capturing a depth image, and the visible-light image includes an overlapping region overlapped with the depth image and a non-overlapping region un-overlapped with the depth image. The method includes determining whether an object appears in both the overlapping region and the non-overlapping region of the visible-light image simultaneously; obtaining first depth information according to the depth image, in response to the object appearing in both the overlapping region and the non-overlapping region of the visible-light image, wherein the object comprises a first part in the overlapping region and a second part in the non-overlapping region, and the first depth information indicates depth information of the first part of the object; obtaining second depth information according to the first depth information, wherein the second depth information indicates depth information of the second part of the object; and obtaining synthesized depth information of the object according to the first depth information and the second depth information.

An image-processing apparatus may be used in an electronic device, the electronic device includes a visible-light camera and a depth camera, a field-of-view (FOV) of the visible-light camera is partially overlapped with a FOV of the depth camera, the visible-light camera is configured for capturing a visible-light image, the depth camera is configured for capturing a depth image, and the visible-light image includes an overlapping region overlapped with the depth image and a non-overlapping region un-overlapped with the depth image. The image-processing apparatus includes a determining module, a first obtaining module, a second obtaining module, and a third obtaining module. The determining module is configured for determining whether an object appears in both the overlapping region and the non-overlapping region of the visible-light image simultaneously. The first obtaining module is configured for first depth information according to the depth image, in response to the object appearing in both the overlapping region and the non-overlapping region of the visible-light image, wherein the object comprises a first part in the overlapping region and a second part in the non-overlapping region, and the first depth information indicates depth information of the first part of the object. The second obtaining module is configured for second depth information according to the first depth information, wherein the second depth information indicates depth information of the second part of the object. The third obtaining module is configured for obtaining synthesized depth information of the object according to the first depth information and the second depth information.

An electronic device includes a visible-light camera, a depth camera, a memory, and a processor, a field-of-view (FOV) of the visible-light camera is partially overlapped with a FOV of the depth camera, the visible-light camera is configured for capturing a visible-light image, the depth camera is configured for capturing a depth image, and the visible-light image includes an overlapping region overlapped with the depth image and a non-overlapping region un-overlapped with the depth image. The processor is configured for executing one or more computer-executable instructions stored in the memory to perform the above image-processing method.

The additional aspects and advantages of the embodiments of the present disclosure will be partly given in the following description, and part of them will become obvious from the following description, or be understood through the practice of the embodiments of the present disclosure.

### BRIEF DESCRIPTION OF THE DRAWINGS

In order to make the technical solution described in the embodiments of the present disclosure more clearly, the drawings used for the description of the embodiments will be briefly described. Apparently, the drawings described below are only for illustration but not for limitation. It should be understood that, one skilled in the art may acquire other drawings based on these drawings, without making any inventive work.
FIG. 1 is a schematic flowchart of an image-processing method according to some embodiments of the present disclosure.
FIG. 2 is a plan view of an electronic device according to some embodiments of the present disclosure.
FIG. 3 is a schematic diagram of an image-processing apparatus according to some embodiments of the present disclosure.
FIG. 4 is a plan view of an electronic device according to some embodiments of the present disclosure.
FIG. 5 is a schematic flowchart of an image-processing method according to some embodiments of the present disclosure.
FIG. 6 is a schematic flowchart of an image-processing method according to some embodiments of the present disclosure.
FIG. 7 is a schematic diagram of an image-processing apparatus according to some embodiments of the present disclosure.
FIG. 8 is a schematic flowchart of an image-processing method according to some embodiments of the present disclosure.
FIG. 9 is a schematic diagram of a determining module of an image-processing apparatus according to some embodiments of the present disclosure.
FIG. 10 to FIG. 12 are schematic flowcharts of image-processing methods according to some embodiments of the present disclosure.
FIG. 13 is a schematic diagram of a second obtaining module of an image-processing apparatus according to some embodiments of the present disclosure.
FIG. 14 is a schematic diagram of a scene for obtaining second depth information in some embodiments of the present disclosure.
FIG. 15 is a schematic flowchart of an image-processing method according to some embodiments of the present disclosure.
FIG. 16 is a schematic diagram of a second obtaining module of an image-processing apparatus according to some embodiments of the present disclosure.
FIG. 17 is a schematic diagram of a scene for obtaining second depth information in some embodiments of the present disclosure.
FIG. 18 is a schematic flowchart of an image-processing method according to some embodiments of the present disclosure.
FIG. 19 is a schematic diagram of a fourth obtaining module of an image-processing apparatus according to some embodiments of the present disclosure.
FIG. 20 is a schematic flowchart of an image-processing method according to some embodiments of the present disclosure.
FIG. 21 is a schematic diagram of a fourth obtaining module of an image-processing apparatus according to some embodiments of the present disclosure.
FIG. 22 is a schematic diagram of a computer-readable storage medium according to some embodiments of the present disclosure.
FIG. 23 is a schematic diagram of a computing device according to some embodiments of the present disclosure.

### DETAILED DESCRIPTION

Embodiments of the present disclosure will be described in detail, examples of which are illustrated the drawings. Same or similar reference numerals may be used to indicate same or similar elements or elements having same or similar functions. The embodiments described below with reference to the drawings are illustrative, are intended to describe the present disclosure, and are not intended to be construed as limiting of the present disclosure.

In the description of the present disclosure, it should be understood that, terms such as "first", "second", and the like are used herein for purposes of description, and are not intended to indicate or imply relative importance or significance or to imply the number of indicated technical features. Thus, the feature defined with "first", "second", and the like may include one or more of such a feature. In the description of the present disclosure, "a plurality of" means two or more, such as two, three, and the like, unless specified otherwise.

In the description of the present disclosure, it should be understood that, unless specified or limited, otherwise, terms "mounted", "connected", "coupled", "fixed", and the like are used in a broad sense, and may include, for example, fixed connections, detachable connections, or integral connections, may also be mechanical or electrical connections, may also be direct connections or indirect connections via intervening structures, and may also be inner communications of two elements, as can be understood by one skilled in the art depending on specific contexts.

The following disclosure provides many different embodiments or examples for realizing different structures of the present disclosure. In order to simplify the disclosure of the present disclosure, the components and settings of specific examples are described below. Of course, they are only examples and are not intended to limit the present disclosure. In addition, the present disclosure may repeat reference numerals and/or reference letters in different examples. Such repetition is for the purpose of simplification and clarity, and does not indicate the relationship between the various embodiments and/or settings discussed. In addition, the present disclosure provides examples of various specific processes and materials, but those of ordinary skill in the art may be aware of the application of other processes and/or the use of other materials.

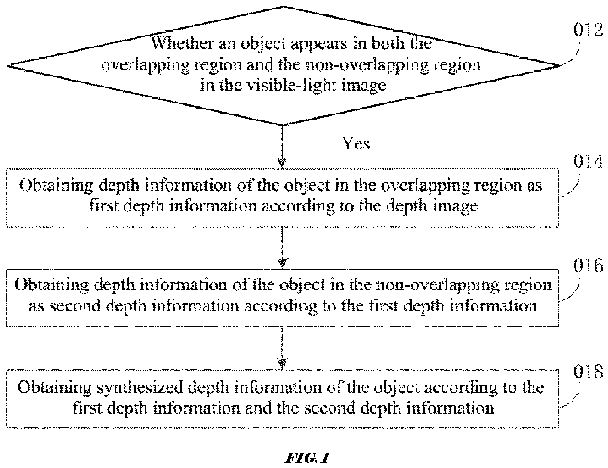

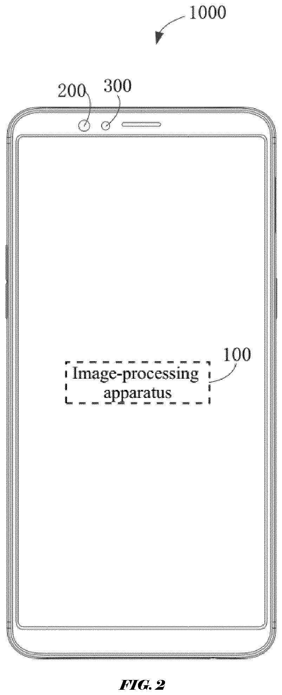

As shown in FIG. 1 and FIG. 2, an image-processing method according to the embodiments of the present disclosure can be used in an electronic device 1000. The electronic device 1000 includes a visible-light camera 200 and a depth camera 300, and a field-of-view (FOV) of the visible-light camera 200 is partially overlapped with a FOV of the depth camera 300. The visible-light camera 200 is used to capture a visible-light image, and the depth camera 300 is used to capture a depth image. The visible-light image includes an overlapping region that overlaps with the depth image and a non-overlapping region that does not overlap with the depth image. The method includes actions/operations in the following.

At 012, the method determines whether an object appears in both the overlapping region and the non-overlapping region in the visible-light image.

At 014, the method obtains depth information of the object in the overlapping region as first depth information according to the depth image, in response to the object appearing in both the overlapping region and the non-overlapping region of the visible-light image.

At 016, the method obtains depth information of the object in the non-overlapping region as second depth information according to the first depth information.

At 018, the method obtains synthesized depth information of the object according to the first depth information and the second depth information.

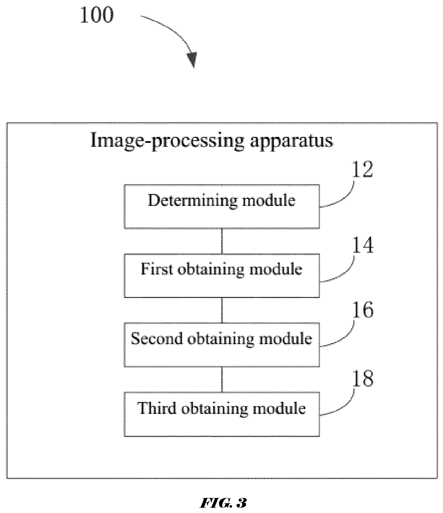

As shown in FIG. 2 and FIG. 3, an image-processing apparatus according to the embodiments of the present disclosure can be used in an electronic device 1000. The electronic device 1000 includes a visible-light camera 200 and a depth camera 300, and a field-of-view (FOV) of the visible-light camera 200 is partially overlapped with a FOV of the depth camera 300. The visible-light camera 200 is used to capture a visible-light image, and the depth camera 300 is used to capture a depth image. The visible-light image includes an overlapping region that overlaps with the depth image and a non-overlapping region that does not overlap with the depth image. The image-processing apparatus 100 includes a determining module 12, a first obtaining module 14, a second obtaining module 16, and a third obtaining module 18. The determining module 12 is used for determining whether an object appears in both the overlapping region and the non-overlapping region in the visible-light image. The first obtaining module 14 is used for obtaining depth information of the object in the overlapping region as first depth information according to the depth image, in response to the object appearing in both the overlapping region and the non-overlapping region of the visible-light image. The second obtaining module 16 is used for obtaining depth information of the object in the non-overlapping region as second depth information according to the first depth information. The third obtaining module 18 is used for obtaining synthesized depth information of the object according to the first depth information and the second depth information.

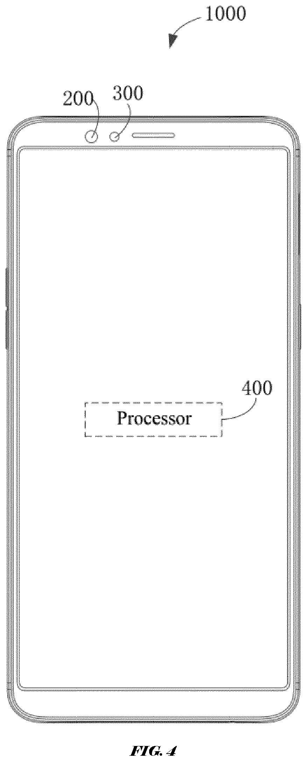

As shown in FIG. 4, the electronic device 1000 according to embodiments of the present disclosure includes a visible-light camera 200 and a depth camera 300, and a field-of-view (FOV) of the visible-light camera 200 is partially overlapped with a FOV of the depth camera 300. The visible-light camera 200 is used to capture a visible-light image, and the depth camera 300 is used to capture a depth image. The visible-light image includes an overlapping region that overlaps with the depth image and a non-overlapping region that does not overlap with the depth image. The electronic device 1000 further includes a processor 400. The processor 400 is used to determine whether an object appears in both the overlapping region and the non-overlapping region in the visible-light image, obtain depth information of the object in the overlapping region as first depth information according to the depth image, in response to the object appearing in both the overlapping region and the non-overlapping region of the visible-light image, obtain depth information of the object in the non-overlapping region as second depth information according to the first depth information, and obtain synthesized depth information of the object according to the first depth information and the second depth information.

That is to say, the image-processing method of embodiments of the present disclosure canbe implemented by the image-processing apparatus 100 of embodiments of the present disclosure. The action/operation at 012 can be implemented by the determining module 12, action/operation at 014 can be implemented by the first obtaining module 14, and action/operation at 016 can be implemented by the second obtaining module 16, and action/operation at 018 can be implemented by the third obtaining module 18. Of course, the image-processing method according to embodiments of the present disclosure can also be implemented by the electronic device 1000 according to embodiments of the present disclosure, where actions/operations at 012, 014, 016, and 018 can all be implemented by the processor 400.

In this way, in the image-processing method, the image-processing apparatus 100 and the electronic device 1000, the second depth information of the object in the non-overlapping region is obtained according to the first depth information of the object in the overlapping region, and the complete synthesized depth information of the object is further obtained based on the first depth information and the second depth information. So, the depth information of the object can be obtained more comprehensively.

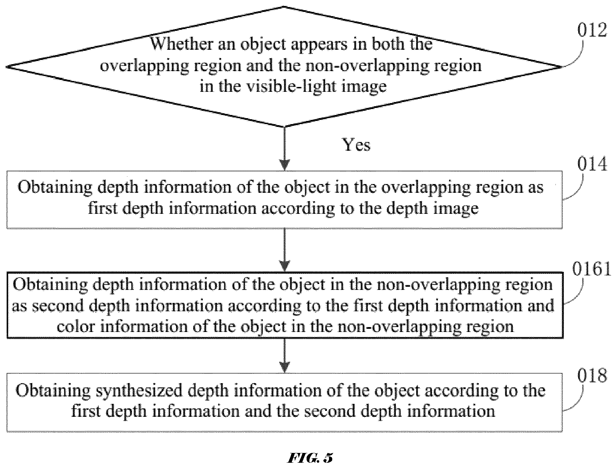

As shown in FIG. 5, in some embodiments, an action/operation at 016 includes the following.

At 0161, the method obtains the depth information of the object in the non-overlapping region as the second depth information according to the first depth information and color information of the object in the non-overlapping region.

As shown in FIG. 3 again, in some embodiments, the second obtaining module 16 may be used to obtain the depth information of the object in the non-overlapping region as the second depth information according to the first depth information and color information of the object in the non-overlapping region.

As shown in FIG. 4 again, in some embodiments, the processor 400 is connected to the visible-light camera 200, and the processor 400 is connected to the depth camera 300. The processor 400 can be used to obtain the depth information of the object in the non-overlapping region as the second depth information according to the first depth information and color information of the object in the non-overlapping region.

In this way, in the image-processing method, the image-processing apparatus 100 and the electronic device 1000, the second depth information of the object in the non-overlapping region is obtained according to the first depth information of the object in the overlapping region and the color information of the object in the non-overlapping region, and the complete synthesized depth information of the object is further obtained based on the first depth information and the second depth information. So, the depth information of the object can be obtained more comprehensively.

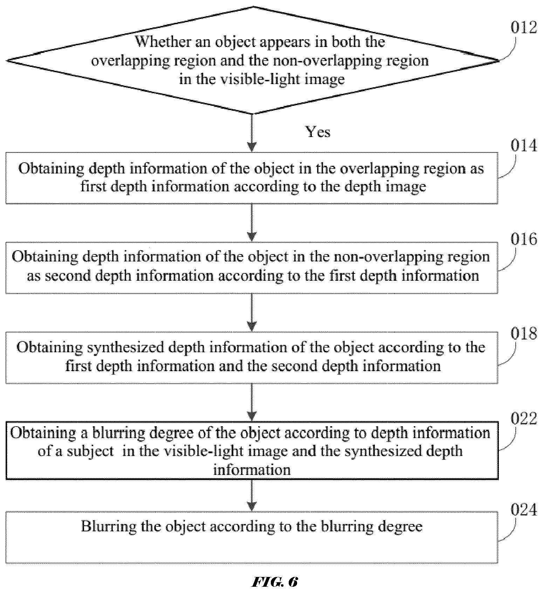

As shown in FIG. 6, in some embodiments, the image-processing method further includes actions/operations in the following.

At 022, the method obtains a blurring degree of the object according to depth information of a subject in the visible-light image and the synthesized depth information of the object.

At 024, the method blurs the object according to the blurring degree.

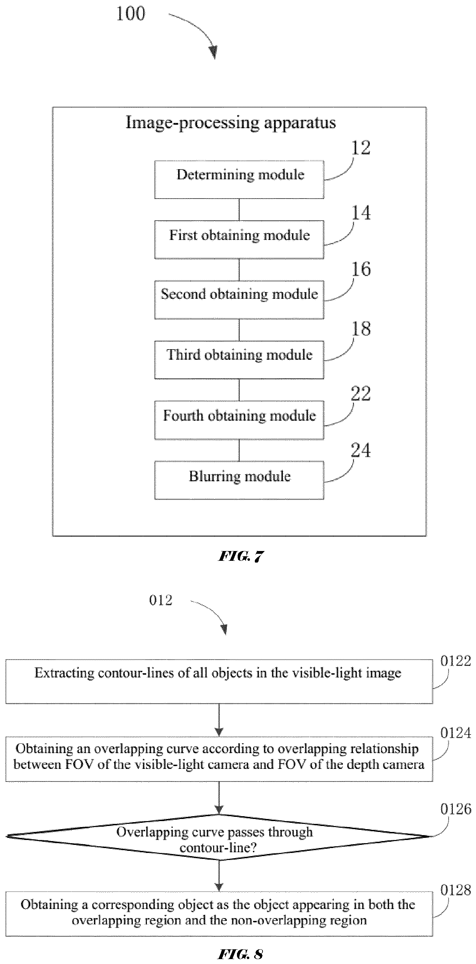

As shown in FIG. 7, in some embodiments, the image-processing apparatus 100 further includes a fourth obtaining module 22 and a blurring module 24. The fourth obtaining module 22 is configured to obtain a blurring degree of the object according to the depth information of a subject in the visible-light image and the synthesized depth information of the object. The blurring module 24 is used to blur the object according to the blurring degree.

As shown in FIG. 4 again, in some embodiments, the processor 400 is further configured to obtain a blurring degree of the object according to the depth information of a subject in the visible-light image and the synthesized depth information of the object, and blur the object according to the blurring degree.

In other words, action/operation at 022 can be implemented by the fourth obtaining module 22, and action/operation at 024 can be implemented by the blurring module 24. Actions/operations at 022 and 024 may also be implemented by the processor 400.

In this way, in the image-processing method, the image-processing apparatus 100, and the electronic device 1000, depth information of a part of an object that is not in the depth image is obtained according to depth information of a part of the object that is in the depth image. This can accurately obtain depth information of the entire object, and thus blurring is accurately performed according to the depth information of the object and depth information of the subject.

The electronic device 1000 may be a camera assembly, a mobile phone, a tablet computer, a laptop computer, a game console, a head-mounted display device, an access control system, a teller machine, etc., which is not limited here.

The visible-light camera 200 may refer to a camera for receiving visible lights to form a visible-light image. The depth camera 300 may refer to a camera used to form a depth image, where the depth image may represent depth information of an object. The depth camera 300 may include a structured-light camera or a time of flight (TOF) camera. Correspondingly, the electronic device 1000 further includes a structured-light projector or a TOF projector.

As the FOV of the visible-light camera 200 is partially overlapped with the FOV of the depth camera 300, a visible-light image captured by the visible-light camera 200 is partially overlapped with a depth image captured by the depth camera 300. Since an overlapping region of the visible-light image overlaps with the depth image, depth information of an object in the overlapping region can be obtained, and as a non-overlapping region of the visible-light image does not overlap with the depth image, an object in the non-overlapping region has no depth information. When an object exists in the overlapping region and the non-overlapping region at the same time, a part of the object in the overlapping region has depth information (that is, the first depth information), and a residual part of the object in the non-overlapping region has no depth information. Since a depth of a same object continuously changes, depth information of the residual part in the non-overlapping region (i.e. second depth information) can be determined by the depth information of the part in the overlapping region. For example, the second depth information is obtained by using the first depth information of the object in the overlapping region and color information of the object in non-overlapping region. Then, depth information of the entire object is determined more accurately as the synthesized depth information, then, the blurring degree of the object can be determined according to the synthesized depth information and depth information of a subject. Then the object is burred according to the blurring degree. Compared with the first depth information of the part of the object, the synthesized depth information can reflect depth information of the object more comprehensively.

In some embodiments, the subject may be determined by user's choice or determined through image-processing. The subject determined through image-processing may be, for example, something at the center of the visible-light image determined through image-processing.

In some embodiments, the subject exists in the overlapping region, and depth information of the subject can be obtained from the depth image corresponding to the overlapping region. In other embodiments, the subject exists in both the overlapping region and the non-overlapping region at the same time, and the depth information of the subject can be obtained by the image-processing method of embodiments of the present disclosure.

As shown in FIG. 8, in some embodiments, action/operation at 012 includes the following.

At 0122, the method extracts contour-lines of all objects in the visible-light image.

At 0124, the method obtains an overlapping curve according to an overlapping relationship between the FOV of the visible-light camera 200 and the FOV of the depth camera 300.

At 0126, the method determines whether the overlapping curve passes through a corresponding contour-line.

At 0128, the method obtains a corresponding object as the object appearing in both the overlapping region and the non-overlapping region, in response to the overlapping curve passing through a contour-line of the corresponding object.

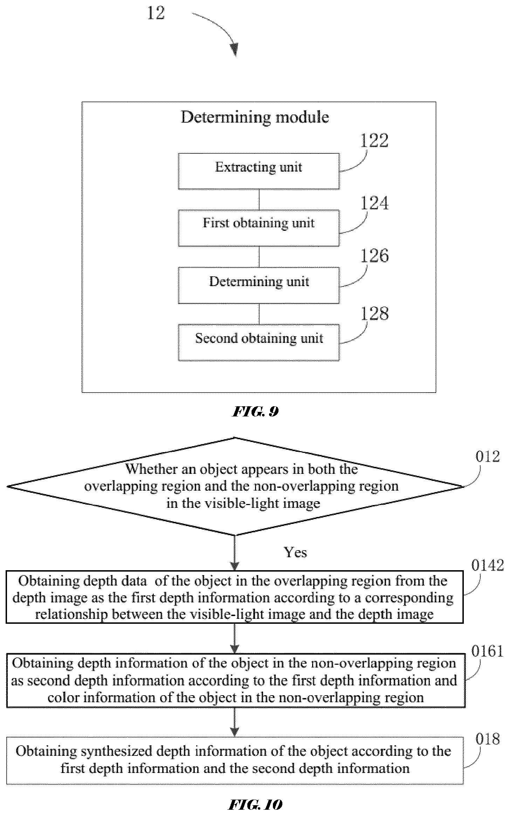

As shown in FIG. 9, in some embodiments, the determining module 12 includes an extracting unit 122, a first obtaining unit 124, a determining unit 126, and a second obtaining unit 128. The extracting unit 122 is used to extract contour-lines of all objects in the visible-light image. The first obtaining unit 124 is configured to obtain an overlapping curve according to an overlapping relationship between the FOV of the visible-light camera 200 and the FOV of the depth camera 300. The determining unit 126 is used to determine whether the overlapping curve passes through a corresponding contour-line. The second obtaining unit 128 is configured to obtain a corresponding object as the object appearing in both the overlapping region and the non-overlapping region, in response to the overlapping curve passing through a contour-line of the corresponding object.

As shown in FIG. 4 again, in some embodiments, the processor 400 is configured to extract contour-lines of all objects in the visible-light image, obtain an overlapping curve according to an overlapping relationship between the FOV of the visible-light camera 200 and the FOV of the depth camera 300, determine whether the overlapping curve passes through a corresponding contour-line, and obtain a corresponding object as the object appearing in both the overlapping region and the non-overlapping region, in response to the overlapping curve passing through a contour-line of the corresponding object.

In other words, action/operation at 0122 can be implemented by the extracting unit 122, action/operation at 0124 can be implemented by the first obtaining unit 124, action/operation at 0126 can be implemented by the determining unit 126, and action/operation at 0128 can be implemented by the second obtaining unit 128. Of course, actions/operations at0122, 0124, 0126, and 0128 can also be implemented by the processor 400.

In this way, an object that appears in both the overlapping region and the non-overlapping region can be determined based on contour-lines of objects and an overlapping relationship between the FOV of the visible-light camera 200 and the FOV of the depth camera 300.

Specifically, a contour-line of an object can be detected by algorithms such as the sobel operator, the prewitt operator, and the canny operator. The overlapping relationship between the FOV of the visible-light camera 200 and the FOV of the depth camera 300 can be determined according to the FOV of the visible-light camera 200, the FOV of the depth camera 300, and a positional relationship between the visible-light camera 200 and the depth camera 300. The overlapping region and the non-overlapping region of the visible-light image are determined according to the overlapping relationship. A curve between the overlapping region and the non-overlapping region can be called as the overlapping curve. It is determined whether the overlapping curve passes through a contour-line of an object, and when the overlapping curve passes through the contour-line of the object, it indicates that the object is an object that appears in both the overlapping region and the non-overlapping region.

In some embodiments, the contour-lines of all objects in the visible-light image can be extracted to determine a corresponding region of each object in the visible-light image, and to determine whether the corresponding region of each object has a part with depth information and residual part without depth information. It is determined that an object appears in the overlapping region and the non-overlapping region at the same time when the corresponding region of the object has a part with depth information and residual part without depth information.

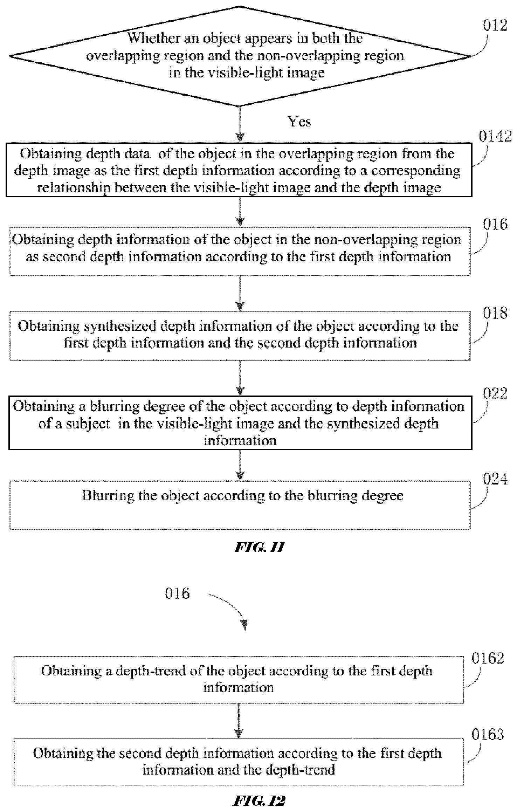

As shown in FIG. 10 and FIG. 11, in some embodiments, action/operation at 014 includes the following.

At 0142, the method obtains depth data of the object in the overlapping region from the depth image as the first depth information according to a corresponding relationship between the visible-light image and the depth image.

As shown in FIG. 3 and FIG. 7 again, in some embodiments, the first obtaining module 14 is configured to obtain depth data of the object in the overlapping region from the depth image as the first depth information according to a corresponding relationship between the visible-light image and the depth image.

As shown in FIG. 4 again, in some embodiments, the processor 400 is configured to obtain depth data of the object in the overlapping region from the depth image as the first depth information according to a corresponding relationship between the visible-light image and the depth image.

In other words, action/operation at 0142 may be implemented by the first obtaining module 14 or the processor 400.

In this way, depth information of a part of an object in the overlapping region can be quickly determined through the depth image.

Specifically, since the overlapping region overlaps with the depth image, a corresponding location of the object in the depth image can be determined according to a corresponding relationship between the visible-light image and the depth image, and the depth data at the corresponding location of the depth image can be extracted as the first depth information of the object.

As shown in FIG. 12, in some embodiments, action/operation at 016 or 0161 includes the following.

At 0162, the method obtains a depth-trend of the object according to the first depth information.

At 0163, the method obtains the second depth information according to the first depth information and the depth-trend.

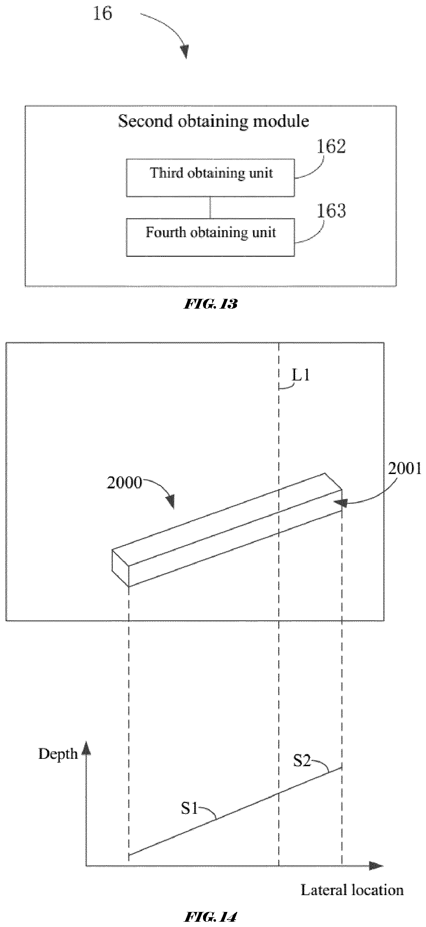

As shown in FIG. 13, in some embodiments, the second obtaining module 16 includes a third obtaining unit 162 and a fourth obtaining unit 163. The third obtaining unit 162 is configured to obtain a depth-trend of the object according to the first depth information. The fourth obtaining unit 163 is configured to obtain the second depth information according to the first depth information and the depth-trend.

As shown in FIG. 4 again, in some embodiments, the processor 400 is configured to obtain a depth-trend of the object according to the first depth information, and obtain the second depth information according to the first depth information and the depth-trend.

In other words, action/operation at 0162 can be implemented by the third obtaining unit 162, and action/operation at 0163 can be implemented by the fourth obtaining unit 163. Of course, actions/operations at 0162 and 0163 can also be implemented by the processor 400.

In this way, the depth-trend of the object can be acquired according to the first depth information, so as to accurately determine the second depth information.

Specifically, the depth-trend of the object can be determined according to the depth-changing principle of the first depth information of the object in the overlapping region, and the depth information of the object in the non-overlapping region can be estimated as the second depth information based on the first depth information and the depth-trend.

As shown in FIG. 14 together, the left side of the curve L1 is the overlapping region, and the right side is the non-overlapping region. A part of the object 2000 is located in the overlapping region, and the other part is located in the non-overlapping region. Taking obtaining synthesized depth information of a surface 2001 of the object 2000 as an example, in the overlapping region, the first depth information of the surface 2001 is shown by the curve S1. As shown in the curve S1, the first depth information of the surface 2001 at different lateral locations changes in a certain depth-trend. For example, the depth-trend has a certain slope.

Further, as the surface 2001 is a continuous surface (for example, it can be known that the surface 2001 is a continuous surface from the color information of the surface 2001), second depth information of the surface 2001 in the non-overlapping region also changes in the above depth-trend. Therefore, the second depth information of the surface 2001 in the non-overlapping region can be obtained according to the above-mentioned depth-trend and the first depth information. the second depth information of the surface 2001 is shown by the curve S2 in FIG. 14.

Of course, FIG. 14 is only used as an exemplary illustration, and the depth-trend of the first depth information may be different for different objects.

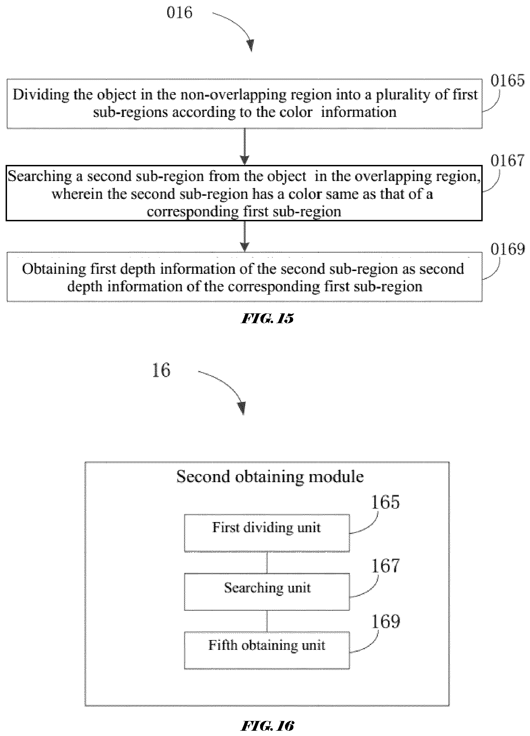

As shown in FIG. 15, in some embodiments, action/operation at 016 or 0161 includes the following.

At 0165, the method divides the object in the non-overlapping region into a plurality of first sub-regions according to the color information.

At 0167, the method searches a second sub-region from the object in the overlapping region, wherein the second sub-region has a color same as that of a corresponding first sub-region.

At 0169, the method obtains first depth information of the second sub-region as second depth information of the corresponding first sub-region.

As shown in FIG. 16, in some embodiments, the second obtaining module 16 includes a first dividing unit 165, a searching unit 167, and a fifth obtaining unit 169. The first dividing unit 165 is configured to divide the object in the non-overlapping region into a plurality of first sub-regions according to color. The searching unit 167 is used to search a second sub-region from the object in the overlapping region, wherein the second sub-region has a color same as that of a corresponding first sub-region. The fifth obtaining unit 169 is configured to obtain first depth information of the second sub-region as second depth information of the corresponding first sub-region.

As shown in FIG. 4 again, in some embodiments, the processor 400 is configured to divide the object in the non-overlapping region into a plurality of first sub-regions according to color, search a second sub-region from the object in the overlapping region, wherein the second sub-region has a color same as that of a corresponding first sub-region, and obtain first depth information of the second sub-region as second depth information of the corresponding first sub-region.

In other words, action/operation at 0165 can be implemented by the first partitioning unit 165, action/operation at 0167 can be implemented by the searching unit 167, and action/operation at 0169 can be implemented by the fifth obtaining unit 169. Of course, actions/operations at 0165, 0167, and 0169 can also be implemented by the processor 400.

In this way, the second depth information can be quickly determined according to color of the object.

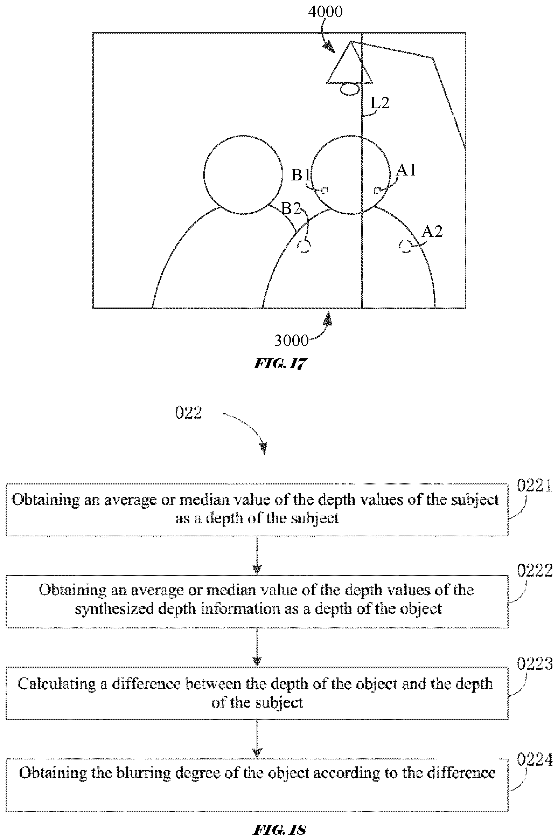

Specifically, as shown in FIG. 17 together, the left side of the curve L2 is the overlapping region, and the right side is the non-overlapping region. Apart of the character 3000 is located in the overlapping region, and the other part is located in the non-overlapping region. In embodiments of the present disclosure, the character 3000 in the non-overlapping region can be divided into a plurality of first sub-regions according to colors, where A1 and A2 are first sub-regions. During dividing, pixels with the same color in the character of the non-overlapping region are divided into the same first sub-region. It can be understood that each first sub-region may be a continuous region, or may be a region composed of multiple spaced regions.

In the overlapping region, by searching the visible-light image of the character 3000, a second sub-region B1 having the same color as the first sub-region A1 and a second sub-region B2 having the same color as the first sub-region A2 can be obtained. At the same time, since the first depth information of the character 3000 in the overlapping region can be obtained through the depth image, depth information of the second sub-regions B1 and B2 are known, and different regions with the same color in the character have same depths probably. For example, both the first sub-region A1 and the second sub-region B1 are located at the cheeks of the character 3000, and both the first sub-region A2 and the second sub-region B2 are located at the arms of the character 3000.

Therefore, it can be considered that the first sub-region A1 has the same depth information as the second sub-region B 1, and the first sub-region A2 has the same depth information as the second sub-region B2. That is, first depth information of the first sub-region B1 can be used as second depth information of the first sub-region A1, and first depth information of the second sub-region B2 may be used as second depth information of the first sub-region A2. Further, as long as a second sub-region with the same color as that of the first sub-region can be found in the visible-light image of the character 3000 in the overlapping region, the complete second depth information of the character 3000 in the non-overlapping region can be obtained.

Of course, complete depth information of different objects can be obtained through actions/operations at 0165, 0167, and 0169. For example, as shown in FIG. 17, while obtaining the synthesized depth information of the character 3000, the above-mentioned method can also be used to obtain the synthesized depth information of the lamp 4000.

After obtaining the first depth information and the second depth information, the first depth information and the second depth information may be synthetized as the synthesized depth information of the object. That is, the first depth information and the second depth information are used to represent depth information of the entire object.

As shown in FIG. 18, in some embodiments, the depth information of the subject includes multiple depth values, and the synthesized depth information includes multiple depth values. Action/operation at 022 includes the following.

At 0221, the method obtains an average or median value of the depth values of the subject as a depth of the subject.

At 0222, the method obtains an average or median value of the depth values of the synthesized depth information as a depth of the object.

At 0223, the method calculates a difference between the depth of the object and the depth of the subject.

At 0224, the method obtains the blurring degree of the object according to the difference, wherein the difference is positively correlated with the blurring degree of the object.

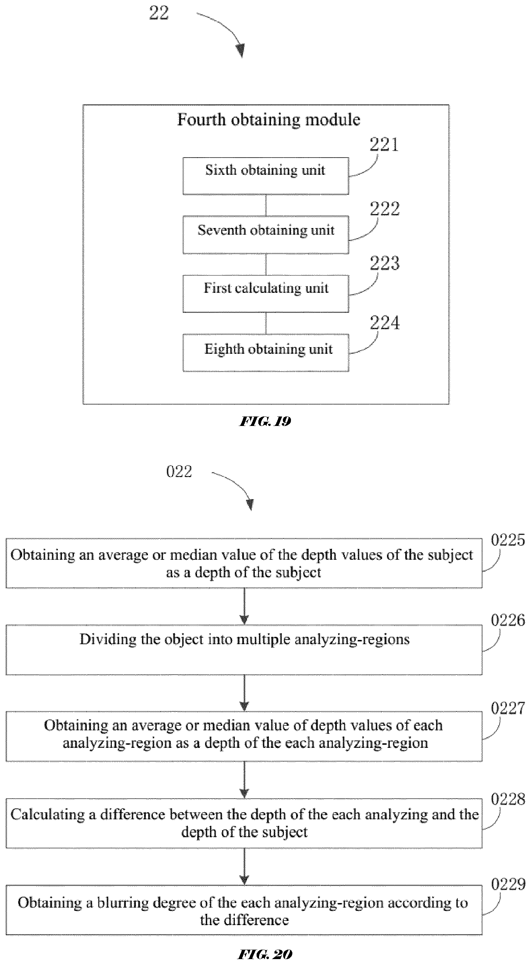

As shown in FIG. 19, in some embodiments, the depth information of the subject includes multiple depth values, and the synthesized depth information includes multiple depth values. The fourth obtaining module 22 includes a sixth obtaining unit 221, a seventh obtaining unit 222, and a calculating unit 223, and an eighth obtaining unit 224. The sixth obtaining unit 221 is configured to obtain an average or median value of the depth values of the subject as a depth of the subject. The seventh obtaining unit 222 is configured to obtain an average or median value of the depth values of the synthesized depth information as a depth of the object. The calculating unit 223 is used to calculate a difference between the depth of the object and the depth of the subject. The eighth obtaining unit 224 is configured to obtain a blurring degree of the object according to the difference, wherein the difference is positively correlated with the blurring degree.

As shown in FIG. 4 again, in some embodiments, the depth information of the subject includes multiple depth values, and the synthesized depth information includes multiple depth values. The processor 400 is used to obtain an average or median value of the depth values of the subject as a depth of the subject, obtain an average or median value of the depth values of the synthesized depth information as a depth of the object, calculate a difference between the depth of the object and the depth of the subject, obtain a blurring degree of the object according to the difference, wherein the difference is positively correlated with the blurring degree.

In other words, action/operation at 0221 can be implemented by the sixth obtaining unit 221, action/operation at 0222 can be implemented by the seventh obtaining unit 222, action/operation at 0223 can be implemented by the first calculating unit 223, and action/operation at 0224 can be implemented by the eighth obtaining unit 224. Of course, actions/operations at 0221, 0222, 0223, and 0224 can also be implemented by the processor 400.

In this way, the depth of the object can be determined, and the blurring degree of the object canbe determined according to the depth of the object and the depth of the subject.

Specifically, since the depth information of the subject includes multiple depth values, the average or median value of the multiple depth values of the subject can be taken as the depth of the subject. Similarly, since the synthesized depth information of the object includes multiple depth values, the average or median value of multiple depth values of the synthesized depth information is taken as the depth of the entire object. The difference between the depth of the object and the depth of the subject is calculated. According to the difference, the blurring degree of the object can be obtained. When the depth of the object is greater than the depth of the subject, the difference is obtained by subtracting the depth of the subject from the depth of the object. When the depth of the object is less than the depth of the subject, the difference is obtained by subtracting the depth of the object from the depth of the subject.

As shown in FIG. 20, in some embodiments, the depth information of the subject includes multiple depth values, and the synthesized depth information includes multiple depth values. Action/operation at 022 includes the following.

At 0225, the method obtains an average or median value of the depth values of the subject as a depth of the subject.

At 0226, the method divides the object into multiple analyzing-regions.

At 0227, the method obtains an average or median value of depth values of each analyzing-region as a depth of the each analyzing-region.

At 0228, the method calculates a difference between the depth of the each analyzing and the depth of the subject.

At 0229, the method obtains a blurring degree of the each analyzing-region according to the difference, wherein the difference is positively correlated with the blurring degree.

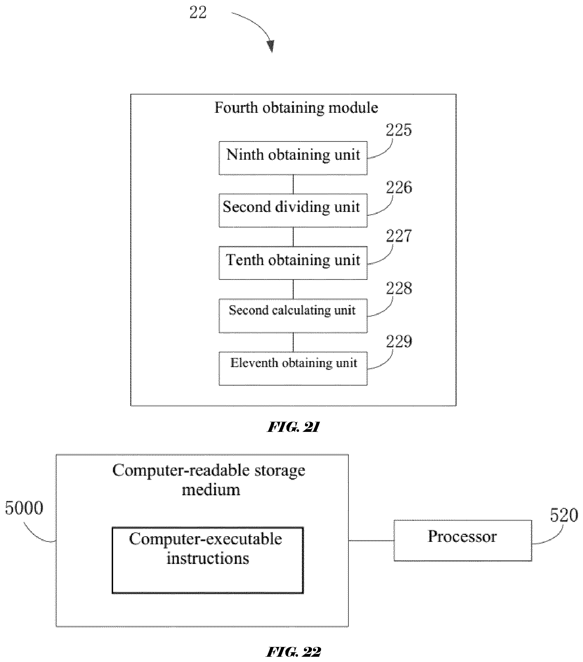

As shown in FIG. 21, in some embodiments, the depth information of the subject includes multiple depth values, and the synthesized depth information includes multiple depth values. The fourth obtaining module 22 includes a ninth obtaining unit 225, a second dividing unit 226, and a tenth obtaining unit 227, a second calculating unit 228, and an eleventh obtaining unit 229. The ninth obtaining unit 225 is configured to obtain an average or median value of the depth values of the subject as a depth of the subject. The second dividing unit 226 is used to divide the object into multiple analyzing-regions. The tenth obtaining unit 227 is configured to obtain an average or median value of depth values of each analyzing-region as a depth of the each analyzing-region. The second calculating unit 228 is used to calculate a difference between the depth of the each analyzing and the depth of the subject. The eleventh obtaining unit 229 is configured to obtain a blurring degree of the each analyzing-region according to the difference, wherein the difference is positively correlated with the blurring degree.

As shown in FIG. 4 again, in some embodiments, the depth information of the subject includes multiple depth values, and the synthesized depth information includes multiple depth values. The processor 400 is used to obtain an average or median value of the depth values of the subject as a depth of the subject, divide the object into multiple analyzing-regions, obtain an average or median value of depth values of each analyzing-region as a depth of the each analyzing-region, calculate a difference between the depth of the each analyzing and the depth of the subject, and obtain a blurring degree of the each analyzing-region according to the difference, wherein the difference is positively correlated with the blurring degree.

In other words, action/operation at 0225 can be implemented by the ninth obtaining unit 225, action/operation at 0226 can be implemented by the second dividing unit 226, action/operation at 0227 can be implemented by the tenth obtaining unit 227, and action/operation at 0228 can be implemented by the second calculating unit 228. 0229 can be implemented by the eleventh obtaining unit 229. Of course, action/operation at 0225, action/operation at 0226, action/operation at 0227, action/operation at 0228, and action/operation at 0229 can also be implemented by the processor 400.

In this way, depth of each analyzing-region of the object can be determined, and the blurring degree thereof can be determined according to the depth of each analyzing-region and the depth of the subject.

Specifically, since the depth information of the subject includes multiple depth values, the average or median value of the multiple depth values of the subject may be used as the depth of the subject. Depth-span of the object may be relatively large, blur-effect may be poor if the same blurring degree is used for the object. Therefore, the object can be divided into multiple analyzing-regions. Since each analyzing-region includes multiple depth values, the average or median value of the multiple depth values of a respective analyzing-region is taken as the depth of the analyzing-region. The difference between the depth of each analyzing-region and the depth of the subject is calculated. According to the depth difference, the blurring degree of each analyzing-region can be obtained. When the depth of the analyzing-region is greater than the depth of the subject, the difference is obtained by subtracting the depth of the subject from the depth of the analyzing-region. When the depth of the analyzing-region is less than the depth of the subject, the difference is obtained by subtracting the depth of the analyzing-region from the depth of the subject.

The difference is positively related to the blurring degree. It can be understood that when the difference is less than a first depth threshold, the blurring degree can be 0, indicating no blurring is performed. When the difference is greater than the first depth threshold and less than a second depth threshold, the blurring degree can be a first blurring degree. When the difference is greater than the second depth threshold and less than a third depth threshold, the blurring degree can be a second blurring degree. When the difference is greater than the third depth threshold and less than a fourth depth threshold, the blurring degree can be a third blurring degree, and so on. The fourth depth threshold > the third depth threshold > the second depth threshold > the first depth threshold > 0, and the third blurring degree > the second blurring degree > the first blurring degree > 0. The above depth thresholds and blurring degrees can be preset or determined according to user's input.

The object is blurred according to the blurring degree, in which Gaussian blurring can be used for blurring. Specifically, a Gaussian kernel for blurring can be determined according to the blurring degree, and then the object can be blurred according to the Gaussian kernel. The Gaussian kernel can be regarded as a weight matrix, and different weights are used for Gaussian blurring processing to obtain different blur-effects, i.e. different blurring degrees. The weight matrix is related to the variance of a function of the Gaussian kernel. The larger the variance is, the wider the radial range of the function of the Gaussian kernel, and the better the smoothing effect is, that is, the higher the blurring degree is. When calculating a Gaussian blurring value of a pixel, the pixel to be calculated is taken as the center pixel, and the weight matrix is used to weight values of pixels around the center pixel to finally obtain the Gaussian blurring value of the pixel to be calculated.

As shown in FIG. 2 again, in some embodiments, the electronic device 1000 includes a visible-light camera 200 and a depth camera 300. The FOV of the visible-light camera 200 is partially overlapped with the FOV of the depth camera 300. The visible-light camera 200 is used to capture a visible-light image, and the depth camera 300 is used to capture a depth image. The visible-light image includes an overlapping region that overlaps with the depth image and a non-overlapping region that does not overlap with the depth image. The electronic device 1000 further includes the image-processing apparatus 100 of any one of the above embodiments.

As shown in FIG. 22, embodiments of the present disclosure also provide a computer-readable storage medium 5000, and the computer-readable storage medium 5000 can store one or more computer-executable instruction. There may be one or more non-transitory computer-readable storage medium 5000. When the computer-executable instructions are executed by one or more processor 520, the processor 520 is caused to perform the image-processing method in any one of foregoing embodiments.

For example, when the computer executable instructions are executed by the processor 520, the processor 520 executes the following.

At 012, determining whether an object appears in both the overlapping region and the non-overlapping region in the visible-light image.

At 014, obtaining depth information of the object in the overlapping region as first depth information according to the depth image, in response to the object appearing in both the overlapping region and the non-overlapping region of the visible-light image.

At 0161, obtaining the depth information of the object in the non-overlapping region as the second depth information according to the first depth information and color information of the object in the non-overlapping region.

At 018, obtaining synthesized depth information of the object according to the first depth information and the second depth information.

For another example, when the computer executable instructions are executed by the processor 520, the processor 520 executes following.

At 012, determining whether an object appears in both the overlapping region and the non-overlapping region in the visible-light image.

At 014, obtaining depth information of the object in the overlapping region as first depth information according to the depth image, in response to the object appearing in both the overlapping region and the non-overlapping region of the visible-light image.

At 016, obtaining depth information of the object in the non-overlapping region as second depth information according to the first depth information.

At 018, obtaining synthesized depth information of the object according to the first depth information and the second depth information.

At 022, obtaining a blurring degree of the object according to depth information of a subject in the visible-light image and the synthesized depth information.

At 024, blurring the object according to the blurring degree.

For another example, when the computer executable instructions are executed by the processor 520, the processor 520 executes following.

At 0122, extracting contour-lines of all objects in the visible-light image.

At 0124, obtaining an overlapping curve according to an overlapping relationship between the FOV of the visible-light camera 200 and the FOV of the depth camera 300.

At 0126, determining whether the overlapping curve passes through a corresponding contour-line.

At 0128, the method obtains a corresponding object as the object appearing in both the overlapping region and the non-overlapping region, in response to the overlapping curve passing through a contour-line of the corresponding object.

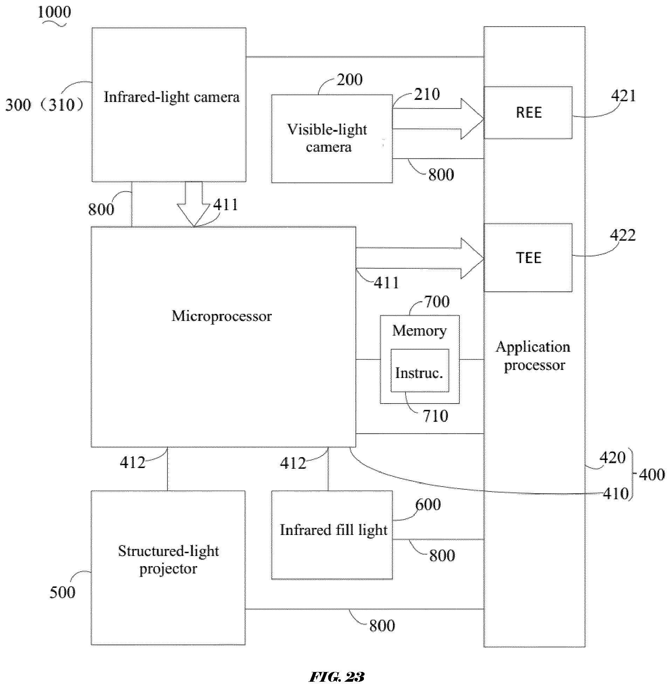

As shown in FIG. 23, embodiments of the present disclosure provide a computing device 1000. The computing device 1000 may be a mobile phone, a tablet computer, a smart watch, a smart bracelet, a smart wearable device, etc. In the embodiments of the present disclosure, the computing device 1000 is a mobile phone as an example for description. It can be understood that the specific form of the computing device 1000 is not limited to the mobile phone. The computing device 1000 includes a visible-light camera 200, a depth camera 300, a processor 400, a structured-light projector 500, an infrared fill light 600, and a memory 700. In the embodiment shown in FIG. 23, the specific form of the depth camera 300 is an infrared-light camera 310, and the processor 400 includes a microprocessor 410 and an application processor (AP) 420.

A visible-light image of a target object can be captured by the visible-light camera 200. The visible-light camera 200 can be connected to the application processor 420 through an Inter-integrated circuit (I2C) bus 800 and a mobile industry processor interface (MIPI) 210. The application processor 420 may be used to enable the visible-light camera 200, turn off the visible-light camera 200, or reset the visible-light camera 200. The visible-light camera 200 can be used to capture color images. The application processor 420 obtains a color image from the visible-light camera 200 through the mobile industry processor interface 210 and stores the color image in a rich execution environment (REE) 421.

An infrared-light image of a target object can be captured by the infrared-light camera 21. The infrared-light camera 21 can be connected to the application processor 420. The application processor 420 can be used to turn on the power of the infrared-light camera 21, turn off the infrared-light camera 21, or reset the infrared-light camera 21. The infrared-light camera 21 can also be connected to the microprocessor 410, and the microprocessor 410 and the infrared-light camera 21 can be connected through an I2C bus 800. The microprocessor 410 can provide the infrared-light camera 21 with clock information for capturing the infrared-light image, and the infrared-light image captured by the infrared-light camera 21 can be transmitted to the microprocessor 410 through a Mobile Industry Processor Interface (MIPI) 411. The infrared fill light 600 can be used to emit infrared-light, and the infrared-light is reflected by the user and received by the infrared-light camera 21. The infrared fill light 600 can be connected to the application processor 420 through the integrated circuit bus 800, and the application processor 420 can be used for enabling the infrared fill light 600. The infrared fill light 600 may also be connected to the microprocessor 410. Specifically, the infrared fill light 600 may be connected to a pulse width modulation (PWM) interface 412 of the microprocessor 410.

The structured-light projector 500 can project laser lights to a target object. The structured-light projector 500 can be connected to the application processor 420, and the application processor 420 can be used to enable the structured-light projector 500 and be connected via the I2C bus 800. The structured-light projector 500 can also be connected to the microprocessor 410. Specifically, the structured-light projector 500 can be connected to the pulse width modulation interface 412 of the microprocessor 410.

The microprocessor 410 may be a processing chip, and the microprocessor 410 is connected to the application processor 420. Specifically, the application processor 420 may be used to reset the microprocessor 410, wake the microprocessor 410, and debug the microprocessor 410. The microprocessor 410 can be connected to the application processor 420 through the mobile industry processor interface 411. Specifically, the microprocessor 410 is connected to the trusted execution environment (TEE) 422 of the application processor 420 through the mobile industry processor interface 411 to directly transmit data in the microprocessor 410 to the trusted execution environment 422 for storage. Codes and storage regions in the trusted execution environment 422 are controlled by an access control unit and cannot be accessed by programs in the rich execution environment (REE) 421. The trusted execution environment 422 and rich execution environment 421 may be formed in the application processor 420.

The microprocessor 410 can obtain an infrared-light image by receiving the infrared-light image captured by the infrared-light camera 21, and the microprocessor 410 can transmit the infrared-light image to the trusted execution environment 422 through the mobile industry processor interface 411. The infrared-light image output from the microprocessor 410 will not enter the rich execution environment 421 of the application processor 420, so that the infrared-light image will not be acquired by other programs, which improves information security of the computing device 1000. The infrared-light image stored in the trusted execution environment 422 can be used as an infrared-light template.

After controlling the structured-light projector 500 to project laser lights to the target object, the microprocessor 410 can also control the infrared-light camera 21 to collect a laser pattern modulated by the target object, and the microprocessor 410 obtains the laser pattern through the mobile industrial processor interface 411. The microprocessor 410 processes the laser pattern to obtain a depth image. Specifically, the microprocessor 410 may store calibration information of the laser light projected by the structured-light projector 500, and the microprocessor 410 processes the laser pattern and the calibration information to obtain depths of a target object at different locations and obtains a depth image. After the depth image is obtained, it is transmitted to the trusted execution environment 422 through the mobile industry processor interface 411. The depth image stored in the trusted execution environment 422 can be used as a depth template.

In the computing device 1000, the obtained infrared-light template and depth template are stored in the trusted execution environment 422. The verification template in the trusted execution environment 422 is not easy to be tampered and embezzled, and information in the computing device 1000 is more secure high.

The memory 700 is connected to both the microprocessor 410 and the application processor 420. The memory 700 stores computer-readable instructions 710. When the computer-readable instructions 710 are executed by the processor 400, the processor 400 executes the image-processing method in any one of the foregoing embodiments. Specifically, the microprocessor 410 may be used to execute actions/operations at 012, 014, 016, 018, 022, 024, 0122, 0124, 0126, 0128, 0142, 0161, 0162, 0163, 0165, 0167, 0169, 0221, 0222, 0223, 0224, 0225, 0226, 0227, 0228, and 0229. The application processor 420 may be used to execute actions/operations at 012, 014, 016, 018, 022, 024, 0122, 0124, 0126, 0128, 0142, 0161, 0162, 0163, 0165, 0167, 0169, 0221, 0222, 0223, 0224, 0225, 0226, 0227, 0228, and 0229. Alternatively, the microprocessor 410 may be used to execute at least one of actions/operations at 012, 014, 016, 018, 022, 024, 0122, 0124, 0126, 0128, 0142, 0161, 0162, 0163, 0165, 0167, 0169, 0221, 0222, 0223, 0224, 0225, 0226, 0227, 0228, and 0229, and the application processor 44 may be used to execute the remaining of actions/operations at 012, 014, 016, 018, 022, 024, 0122, 0124, 0126, 0128, 0142, 0161, 0162, 0163, 0165, 0167, 0169, 0221, 0222, 0223, 0224, 0225, 0226, 0227, 0228, and 0229.

In the description of the present specification, the description with reference to the terms "one embodiment", "some embodiments", "illustrative embodiment", "example", "specific example", or "some examples", and the like, means that a specific feature, structure, material, or characteristic described in connection with the embodiment or example is included in at least one embodiment or example of the present disclosure. Thus, the illustrative descriptions of the terms throughout this specification are not necessarily referring to the same embodiment or example of the present disclosure. Furthermore, the specific features, structures, materials, or characteristics may be synthesized in any suitable manner in one or more embodiments or examples.

Any process or method description in the flowcharts or otherwise described herein may be understood to represent a module, segment or portion of code that includes one or more executable instruction for implementing the steps of a particular logical function or process. And the scope of the preferred embodiments of the present disclosure includes additional implementations, in which the involved functions may be performed in a substantially simultaneous manner or in the reverse order, instead of the illustrated or discussed order. It will be understood by those skilled in the art to which the embodiments of the present disclosure pertain.

The logic and/or steps described in other manners herein or shown in the flow chart, for example, a particular order list of executable instructions for realizing the logical function, may be specifically achieved in any computer-readable medium to be used by an instruction execution system, a device or an equipment (such as a system based on computers, a system including processors or other systems capable of acquiring an instruction from the instruction execution system, device and equipment and executing the instruction), or to be used in combination with the instruction execution system, device and equipment. As to the specification, "the computer-readable medium" may be any device adaptive for including, storing, communicating, propagating or transferring programs to be used by or in combination with the instruction execution system, device or equipment. More specific examples of the computer-readable medium may include but be not limited to: an electronic connection (an electronic device) with one or more wires, a portable computer enclosure (a magnetic device), a random-access memory (RAM), a read-only memory (ROM), an erasable programmable read-only memory (EPROM or a flash memory), an optical fiber device and a portable compact disk read-only memory (CDROM). In addition, the computer-readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that, each part of the present disclosure may be realized by hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), and the like.

One of ordinary skill in the art can understand that all or part of the steps carried by the method in the above embodiments can be completed by a program to instruct related hardware, and the program can be stored in a computer-readable storage medium. When executed, one or a combination of the steps of the method embodiments is included.

In addition, each functional unit in each embodiment of the present disclosure may be integrated into one processing module, or each unit may exist physically separately, or two or more units may be integrated into one module. The above integrated modules can be implemented in the form of hardware or in the form of software functional modules. The integrated modules, if implemented in the form of software functional modules and sold or used as stand-alone products, may also be stored in a computer-readable storage medium.

The above-mentioned storage medium may be a read only memory, a magnetic disk, or an optical disk. While the embodiments of the present disclosure have been shown and described above, it is understood that the above-described embodiments are illustrative and are not to be construed as limiting the scope of the present disclosure. The embodiments are subject to variations, modifications, substitutions and variations by the skilled in the art within the scope of the present disclosure.

The embodiments that are not covered by the claims serve as related art or examples useful to the understanding of the invention.

## Claims

1. An image-processing method in an electronic device (1000), the electronic device (1000) comprising a visible-light camera (200) and a depth camera (300), a field-of-view (FOV) of the visible-light camera (200) being partially overlapped with a FOV of the depth camera (300), the visible-light camera (200) being configured for capturing a visible-light image, the depth camera (300) being configured for capturing a depth image, and the visible-light image comprising an overlapping region overlapped with the depth image and a non-overlapping region un-overlapped with the depth image, **characterized by** comprising:
determining (012) whether an object appears in both the overlapping region and the non-overlapping region of the visible-light image simultaneously;
obtaining (014) first depth information according to the depth image, in response to the object appearing in both the overlapping region and the non-overlapping region of the visible-light image, wherein the object comprises a first part in the overlapping region and a second part in the non-overlapping region, and the first depth information indicates depth information of the first part of the object;
obtaining (016) second depth information according to the first depth information, wherein the second depth information indicates depth information of the second part of the object; and
obtaining (018) synthesized depth information of the object according to the first depth information and the second depth information.

2. The image-processing method as claimed in claim 1, wherein the obtaining (016) second depth information according to the first depth information comprises:
obtaining (0161) the second depth information according to the first depth information and color information of the second part of the object in the non-overlapping region.

3. The image-processing method as claimed in claim 2, wherein the obtaining (016, 0161) the second depth information according to the first depth information and color information of the second part of the object in the non-overlapping region, comprises:
dividing (0165) the second part of the object in the non-overlapping region into a plurality of first sub-regions according to the color information;
searching (0167) a second sub-region from the first part of the object in the overlapping region, wherein the second sub-region has a color same as that of a corresponding first sub-region; and
obtaining (0169) depth information of the second sub-region as depth information of the corresponding first sub-region.

4. The image-processing method as claimed in claim 2, wherein the obtaining (016, 0161) the second depth information according to the first depth information and color information of the second part of the object in the non-overlapping region, comprises:
obtaining a depth-trend according to the first depth information, wherein the depth-trend represents a depth-changing principle of the object in the overlapping region; and
obtaining the second depth information according to the first depth information, the depth-trend, and the color information.

5. The image-processing method as claimed in claim 1, wherein the obtaining (016, 0161) the second depth information according to the first depth information and color information of the second part of the object in the non-overlapping region, comprises:
obtaining (0162) a depth-trend according to the first depth information, wherein the depth-trend represents a depth-changing principle of the object in the overlapping region; and
obtaining (0163) the second depth information according to the first depth information and the depth-trend.

6. The image-processing method as claimed in claim 1, further comprising:
obtaining (022) a blurring degree of the object according to depth information of a subject in the visible-light image and the synthesized depth information of the object, wherein the subject is selected by a user or determined by default; and
blurring (024) the object according to the blurring degree.

7. The image-processing method as claimed in claim 2 or 6, wherein the determining (012) whether an object appears in both the overlapping region and the non-overlapping region of the visible-light image simultaneously, comprises:
extracting (0122) contour-lines of all objects in the visible-light image;
obtaining (0124) an overlapping curve according to an overlapping relationship between the FOV of the visible-light camera and the FOV of the depth camera;
determining (0126) whether the overlapping curve passes through a corresponding contour-line; and
obtaining (0128) a corresponding object as the object appearing in both the overlapping region and the non-overlapping region, in response to the overlapping curve passing through a contour-line of the corresponding object.

8. The image-processing method as claimed in claim 2 or 6, wherein the obtaining (014) first depth information according to the depth image, comprises:
obtaining (0142) depth data of the first part of the object in the overlapping region from the depth image as the first depth information.

9. The image-processing method as claimed in claim 6, wherein the depth information of the subject comprises a plurality of first depth values, and the synthesized depth information of the object comprises a plurality of second depth values; and
the obtaining (022) a blurring degree of the object according to depth information of a subject in the visible-light image and the synthesized depth information of the object, comprises:
obtaining (0221) a first representing value of the first depth values as a depth of the subject, wherein the first representing value is an average value of the first depth values, or a median value of the first depth values;
obtaining (0222) a second representing value of the second depth values as a depth of the object, wherein the second representing value is an average value of the second depth values, or a median value of the second depth values;
calculating (0223) a difference between the depth of the object and the depth of the subject; and
obtaining (0224) the blurring degree of the object according to the difference, wherein the difference is positively correlated with the blurring degree of the object.

10. The image-processing method as claimed in claim 6, wherein the depth information of the subject comprises a plurality of first depth values; and
the obtaining (022) a blurring degree of the object according to depth information of a subject in the visible-light image and the synthesized depth information of the object, comprises:
obtaining (0225) a first representing value of the first depth values as a depth of the subject, wherein the first representing value is an average value of the first depth values, or a median value of the first depth values;
dividing (0226) the object into a plurality of analyzing-regions, wherein each analyzing-region has a plurality of depth values;
obtaining (0227) a third representing value of the depth values of the each analyzing-region as a depth of the each analyzing-region, wherein the third representing value is an average value of the depth values, or a median value of the depth values;
calculating (0228) the difference between the depth of the each analyzing and the depth of the subject; and
obtaining (0229) a blurring degree of the each analyzing-region according to the difference, wherein the difference is positively correlated with the blurring degree of the each analyzing-region.

11. An electronic device (1000), comprising a visible-light camera (200), a depth camera (300), a processor (400), and a memory (5000, 700), a field-of-view (FOV) of the visible-light camera (200) being partially overlapped with a FOV of the depth camera (300), the visible-light camera (200) being configured for capturing a visible-light image, the depth camera (300) being configured for capturing a depth image, and the visible-light image comprising an overlapping region overlapped with the depth image and a non-overlapping region un-overlapped with the depth image,
**characterized in that** the processor is configured for executing one or more computer-executable instructions stored in the memory to perform an image-processing method as claimed in any one of claims 1-10.

## Patentansprüche

1. Bildverarbeitungsverfahren in einer elektronischen Vorrichtung (1000), wobei die elektronische Vorrichtung (1000) eine Kamera (200) für sichtbares Licht und eine Tiefenkamera (300) umfasst, wobei ein Gesichtsfeld (FOV) der Kamera (200) für sichtbares Licht teilweise mit einem FOV der Tiefenkamera (300) überlappt, wobei die Kamera (200) für sichtbares Licht zum Erfassen eines Bildes von sichtbarem Licht ausgelegt ist, wobei die Tiefenkamera (300) zum Erfassen eines Tiefenbildes ausgelegt ist, und wobei das Bild von sichtbarem Licht einen überlappenden Bereich, der mit dem Tiefenbild überlappt, und einen nicht überlappenden Bereich, der nicht mit dem Tiefenbild überlappt, umfasst, **dadurch gekennzeichnet, dass** das Verfahren folgende Vorgänge umfasst:
Bestimmen (012), ob ein Objekt gleichzeitig im überlappenden Bereich und dem nicht überlappenden Bereich des Bildes von sichtbarem Licht erscheint;
Erhalten (014) ersten Tiefeninformationen gemäß dem Tiefenbild als Reaktion darauf, dass das Objekt sowohl im überlappenden Bereich als auch im nicht überlappenden Bereich des Bildes von sichtbarem Licht erscheint, wobei das Objekt einen ersten Teil im überlappenden Bereich und einen zweiten Teil im nicht überlappenden Bereich umfasst, und die ersten Tiefeninformationen Tiefeninformationen über den ersten Teil des Objekts angeben;
Erhalten (016) von zweiten Tiefeninformationen gemäß den ersten Tiefeninformationen, wobei die zweiten Tiefeninformationen Tiefeninformationen über den zweiten Teil des Objekts angeben; und
Erhalten (018) von synthetisierten Tiefeninformationen über das Objekt gemäß den ersten Tiefeninformationen und den zweiten Tiefeninformationen.

2. Bildverarbeitungsverfahren nach Anspruch 1, wobei das Erhalten (016) von zweiten Tiefeninformationen gemäß der ersten Tiefeninformationen umfasst:
Erhalten (0161) der zweiten Tiefeninformationen gemäß den ersten Tiefeninformationen und den Farbinformationen über den zweiten Teil des Objekts im nicht überlappenden Bereich.

3. Bildverarbeitungsverfahren nach Anspruch 2, wobei das Erhalten (016, 0161) der zweiten Tiefeninformationen gemäß den ersten Tiefeninformationen und den Farbinformationen über den zweiten Teil des Objekts im nicht überlappenden Bereich umfasst:
Unterteilen (0165) des zweiten Teils des Objekts im nicht überlappenden Bereich in eine Vielzahl von ersten Teilbereichen gemäß den Farbinformationen;
Suchen (0167) eines zweiten Teilbereichs aus dem ersten Teil des Objekts im überlappenden Bereich, wobei der zweite Teilbereich die gleiche Farbe wie ein entsprechender erster Teilbereich aufweist; und
Erhalten (0169) von Tiefeninformationen über den zweiten Teilbereich als Tiefeninformationen des entsprechenden ersten Teilbereichs.

4. Bildverarbeitungsverfahren nach Anspruch 2, wobei das Erhalten (016, 0161) der zweiten Tiefeninformationen gemäß den ersten Tiefeninformationen und den Farbinformationen über den zweiten Teil des Objekts im nicht überlappenden Bereich umfasst:
Erhalten eines Tiefentrends gemäß den ersten Tiefeninformationen, wobei der Tiefentrend ein Tiefenveränderungsprinzip des Objekts im überlappenden Bereich repräsentiert; und
Erhalten der zweiten Tiefeninformationen gemäß den ersten Tiefeninformationen, dem Tiefentrend und den Farbinformationen.

5. Bildverarbeitungsverfahren nach Anspruch 1, wobei das Erhalten (016, 0161) der zweiten Tiefeninformationen gemäß den ersten Tiefeninformationen und den Farbinformationen über den zweiten Teil des Objekts im nicht überlappenden Bereich umfasst:
Erhalten (0162) eines Tiefentrends gemäß den ersten Tiefeninformationen, wobei der Tiefentrend ein Tiefenveränderungsprinzip des Objekts im überlappenden Bereich repräsentiert; und
Erhalten (0163) der zweiten Tiefeninformationen gemäß den ersten Tiefeninformationen und dem Tiefentrend.

6. Bildverarbeitungsverfahren nach Anspruch 1, ferner umfassend:
Erhalten (022) eines Unschärfeerzeugungsgrades des Objekts gemäß Tiefeninformationen über ein Motiv im Bild von sichtbarem Licht und den synthetisierten Tiefeninformationen über das Objekt, wobei das Motiv von einem Benutzer ausgewählt oder durch Vorgabe bestimmt wird; und
Erzeugen von Unschärfe (024) für das Objekt gemäß dem Unschärfeerzeugungsgrad.

7. Bildverarbeitungsverfahren nach Anspruch 2 oder 6, wobei das Bestimmen (012), ob ein Objekt gleichzeitig im überlappenden Bereich und dem nicht überlappenden Bereich des Bildes von sichtbarem Licht erscheint, umfasst:
Extrahieren (0122) von Konturlinien aller Objekte im Bild von sichtbarem Licht;
Erhalten (0124) einer Überlappungskurve gemäß einer Überlappungsbeziehung zwischen dem FOV der Kamera für sichtbares Licht und dem FOV der Tiefenkamera;
Bestimmen (0126), ob die Überlappungskurve durch eine entsprechende Konturlinie verläuft; und
Erhalten (0128) eines entsprechenden Objekts als das Objekt, das sowohl im überlappenden Bereich als auch im nicht überlappenden Bereich erscheint, als Reaktion darauf, dass die Überlappungskurve durch eine Konturlinie des entsprechenden Objekts verläuft.

8. Bildverarbeitungsverfahren nach Anspruch 2 oder 6, wobei das Erhalten (014) von ersten Tiefeninformationen gemäß dem Tiefenbild umfasst:
Erhalten (0142) von Tiefendaten über den ersten Teil des Objekts im überlappenden Bereich aus dem Tiefenbild als die ersten Tiefeninformationen.

9. Bildverarbeitungsverfahren nach Anspruch 6, wobei die Tiefeninformationen über das Motiv eine Vielzahl von ersten Tiefenwerten umfassen und die synthetisierten Tiefeninformationen über das Objekt eine Vielzahl von zweiten Tiefenwerten umfassen; und
das Erhalten (022) eines Unschärfeerzeugungsgrades des Objekts gemäß Tiefeninformationen über ein Motiv im Bild von sichtbarem Licht und den synthetisierten Tiefeninformationen über das Objekt umfasst:
Erhalten (0221) eines ersten repräsentativen Wertes der ersten Tiefenwerte als eine Tiefe des Motivs, wobei der erste repräsentative Wert ein Mittelwert der ersten Tiefenwerte oder ein Medianwert der ersten Tiefenwerte ist;
Erhalten (0222) eines zweiten repräsentativen Wertes der zweiten Tiefenwerte als eine Tiefe des Objekts, wobei der erste repräsentative Wert ein Mittelwert der zweiten Tiefenwerte oder ein Medianwert der zweiten Tiefenwerte ist;
Berechnen (0223) einer Differenz zwischen der Tiefe des Objekts und der Tiefe des Motivs; und
Erhalten (0224) des Unschärfeerzeugungsgrades des Objekts gemäß der Differenz, wobei die Differenz positiv mit dem Unschärfeerzeugungsgrad des Objekts korreliert ist.

10. Bildverarbeitungsverfahren nach Anspruch 6, wobei die Tiefeninformationen über das Motiv eine Vielzahl von ersten Tiefenwerten umfassen; und
das Erhalten (022) eines Unschärfeerzeugungsgrades des Objekts gemäß Tiefeninformationen über ein Motiv im Bild von sichtbarem Licht und den synthetisierten Tiefeninformationen über das Objekt umfasst:
Erhalten (0225) eines ersten repräsentativen Wertes der ersten Tiefenwerte als eine Tiefe des Motivs, wobei der erste repräsentative Wert ein Mittelwert der ersten Tiefenwerte oder ein Medianwert der ersten Tiefenwerte ist;
Unterteilen (0226) des Objekts in eine Vielzahl von Analysebereichen, wobei jeder Analysebereich eine Vielzahl von Tiefenwerten aufweist;
Erhalten (0227) eines dritten repräsentativen Wertes der Tiefenwerte jedes Analysebereichs als eine Tiefe des jeweiligen Analysebereichs, wobei der dritte repräsentative Wert ein Mittelwert der Tiefenwerte oder ein Medianwert der Tiefenwerte ist;
Berechnen (0228) der Differenz zwischen der Tiefe der jeweiligen Analyse und der Tiefe des Motivs; und
Erhalten (0229) eines Unschärfeerzeugungsgrades des jeweiligen Analysebereichs gemäß der Differenz, wobei die Differenz positiv mit dem Unschärfeerzeugungsgrad des jeweiligen Analysebereichs korreliert ist.

11. Elektronische Vorrichtung (1000), umfassend eine Kamera (200) für sichtbares Licht, eine Tiefenkamera (300), einen Prozessor (400) und einen Speicher (5000, 700), wobei ein Gesichtsfeld (FOV) der Kamera (200) für sichtbares Licht teilweise mit einem FOV der Tiefenkamera (300) überlappt, wobei die Kamera (200) für sichtbares Licht zum Erfassen eines Bildes von sichtbarem Licht ausgelegt ist, wobei die Tiefenkamera (300) zum Erfassen eines Tiefenbildes ausgelegt ist, und wobei das Bild von sichtbarem Licht einen überlappenden Bereich, der mit dem Tiefenbild überlappt, und einen nicht überlappenden Bereich, der nicht mit dem Tiefenbild überlappt, umfasst, **dadurch gekennzeichnet, dass** der Prozessor dafür ausgelegt ist, eine oder mehrere im Speicher gespeicherte computerausführbare Anweisungen zum Durchführen eines Bildverarbeitungsverfahrens nach einem der Ansprüche 1 bis 10 auszuführen.

## Revendications

1. Procédé de traitement d'image dans un dispositif électronique (1000), le dispositif électronique (1000) comprenant une caméra à lumière visible (200) et une caméra de profondeur (300), un champ de vue (FOV) de la caméra à lumière visible (200) étant partiellement en chevauchement avec un FOV de la caméra de profondeur (300), la caméra à lumière visible (200) étant configurée pour capturer une image de lumière visible, la caméra de profondeur (300) étant configurée pour capturer une image de profondeur, et l'image de lumière visible comprenant une région de chevauchement en chevauchement avec l'image de profondeur et une région de non-chevauchement non en chevauchement avec l'image de profondeur, **caractérisé en ce qu'**il comprend :
la détermination (012) qu'un objet apparaît, ou n'apparaît pas, à la fois dans la région de chevauchement et dans la région de non-chevauchement de l'image de lumière visible simultanément ;
l'obtention (014) de premières informations de profondeur selon l'image de profondeur, au réponse au fait que l'objet apparaît à la fois dans la région de chevauchement et dans la région de non-chevauchement de l'image de lumière visible, dans lequel l'objet comprend une première partie dans la région de chevauchement et une seconde partie dans la région de non-chevauchement, et les premières informations de profondeur indiquent des informations de profondeur de la première partie de l'objet ;
l'obtention (016) de secondes informations de profondeur selon les premières informations de profondeur, dans lequel les secondes informations de profondeur indiquent des informations de profondeur de la seconde partie de l'objet ; et
l'obtention (018) d'informations de profondeur synthétisées de l'objet selon les premières informations de profondeur et les secondes informations de profondeur.

2. Procédé de traitement d'image tel que revendiqué dans la revendication 1, dans lequel l'obtention (016) de secondes informations de profondeur selon les premières informations de profondeur comprend :
l'obtention (0161) des secondes informations de profondeur selon les premières informations de profondeur et des informations de couleur de la seconde partie de l'objet dans la région de non-chevauchement.

3. Procédé de traitement d'image tel que revendiqué dans la revendication 2, dans lequel l'obtention (016, 0161) des secondes informations de profondeur selon les premières informations de profondeur et des informations de couleur de la seconde partie de l'objet dans la région de non-chevauchement comprend :
la division (0165) de la seconde partie de l'objet dans la région de non-chevauchement en une pluralité de premières sous-régions selon les informations de couleur ;
la recherche (0167) d'une seconde sous-région, à partir de la première partie de l'objet dans la région de chevauchement, dans lequel la seconde sous-région a une couleur identique à celle d'une première sous-région correspondante ; et
l'obtention (0169) d'informations de profondeur de la seconde sous-région en tant qu'informations de profondeur de la première sous-région correspondante.

4. Procédé de traitement d'image tel que revendiqué dans la revendication 2, dans lequel l'obtention (016, 0161) des secondes informations de profondeur selon les premières informations de profondeur et des informations de couleur de la seconde partie de l'objet dans la région de non-chevauchement comprend :
l'obtention d'une tendance de profondeur selon les premières informations de profondeur, dans lequel la tendance de profondeur représente un principe de changement de profondeur de l'objet dans la région de chevauchement ; et
l'obtention des secondes informations de profondeur selon les premières informations de profondeur, la tendance de profondeur, et les informations de couleur.

5. Procédé de traitement d'image tel que revendiqué dans la revendication 1, dans lequel l'obtention (016, 0161) des secondes informations de profondeur selon les premières informations de profondeur et des informations de couleur de la seconde partie de l'objet dans la région de non-chevauchement comprend :
l'obtention (0162) d'une tendance de profondeur selon les premières informations de profondeur, dans lequel la tendance de profondeur représente un principe de changement de profondeur de l'objet dans la région de chevauchement ; et
l'obtention (0163) des secondes informations de profondeur selon les premières informations de profondeur et la tendance de profondeur.

6. Procédé de traitement d'image tel que revendiqué dans la revendication 1, comprenant en outre :
l'obtention (022) d'un degré de flou de l'objet selon des informations de profondeur d'un sujet dans l'image de lumière visible et les informations de profondeur synthétisées de l'objet, dans lequel le sujet est sélectionné par un utilisateur ou déterminé par défaut ; et
le floutage (024) de l'objet selon le degré de flou.

7. Procédé de traitement d'image tel que revendiqué dans la revendication 2 ou 6, dans lequel la détermination (012) qu'un objet apparaît, ou n'apparaît pas, à la fois dans la région de chevauchement et dans la région de non-chevauchement de l'image de lumière visible simultanément comprend :
l'extraction (0122) de lignes de contour de la totalité des objets dans l'image de lumière visible ;
l'obtention (0124) d'une courbe de chevauchement selon une relation de chevauchement entre le FOV de la caméra à lumière visible et le FOV de la caméra de profondeur ;
la détermination (0126) que la courbe de chevauchement passe, ou ne passe pas, à travers une ligne de contour correspondante ; et
l'obtention (0128) d'un objet correspondant en tant qu'objet apparaissant à la fois dans la région de chevauchement et dans la région de non-chevauchement, au réponse au fait que la courbe de chevauchement passe à travers une ligne de contour de l'objet correspondant.

8. Procédé de traitement d'image tel que revendiqué dans la revendication 2 ou 6, dans lequel l'obtention (014) de premières informations de profondeur selon l'image de profondeur comprend :
l'obtention (0142) de données de profondeur de la première partie de l'objet dans la région de chevauchement, à partir de l'image de profondeur, en tant que premières informations de profondeur.

9. Procédé de traitement d'image tel que revendiqué dans la revendication 6, dans lequel les informations de profondeur du sujet comprennent une pluralité de premières valeurs de profondeur, et les informations de profondeur synthétisées de l'objet comprennent une pluralité de secondes valeurs de profondeur ; et
l'obtention (022) d'un degré de flou de l'objet selon des informations de profondeur d'un sujet dans l'image de lumière visible et les informations de profondeur synthétisées de l'objet comprend :
l'obtention (0221) d'une première valeur de représentation des premières valeurs de profondeur en tant que profondeur du sujet, dans lequel la première valeur de représentation est une valeur moyenne des premières valeurs de profondeur, ou une valeur médiane des premières valeurs de profondeur ;
l'obtention (0222) d'une deuxième valeur de représentation des secondes valeurs de profondeur en tant que profondeur de l'objet, dans lequel la deuxième valeur de représentation est une valeur moyenne des secondes valeurs de profondeur, ou une valeur médiane des secondes valeurs de profondeur ;
le calcul (0223) d'une différence entre la profondeur de l'objet et la profondeur du sujet ; et
l'obtention (0224) du degré de flou de l'objet selon la différence, dans lequel la différence est positivement corrélée avec le degré de flou de l'objet.

10. Procédé de traitement d'image tel que revendiqué dans la revendication 6, dans lequel les informations de profondeur du sujet comprennent une pluralité de premières valeurs de profondeur ; et
l'obtention (022) d'un degré de flou de l'objet selon des informations de profondeur d'un sujet dans l'image de lumière visible et les informations de profondeur synthétisées de l'objet comprend :
l'obtention (0225) d'une première valeur de représentation des premières valeurs de profondeur en tant que profondeur du sujet, dans lequel la première valeur de représentation est une valeur moyenne des premières valeurs de profondeur, ou une valeur médiane des premières valeurs de profondeur ;
la division (0226) de l'objet en une pluralité de régions d'analyse, dans lequel chaque région d'analyse a une pluralité de valeurs de profondeur ;
l'obtention (0227) d'une troisième valeur de représentation des valeurs de profondeur de chaque région d'analyse en tant que profondeur de chaque région d'analyse, dans lequel la troisième valeur de représentation est une valeur moyenne des valeurs de profondeur, ou une valeur médiane des valeurs de profondeur ;
le calcul (0228) de la différence entre la profondeur de chaque région d'analyse et la profondeur du sujet ; et
l'obtention (0229) d'un degré de flou de chaque région d'analyse selon la différence, dans lequel la différence est positivement corrélée avec le degré de flou de chaque région d'analyse.

11. Dispositif électronique (1000), comprenant une caméra à lumière visible (200), une caméra de profondeur (300), un processeur (400), et une mémoire (5000, 700), un champ de vue (FOV) de la caméra à lumière visible (200) étant partiellement en chevauchement avec un FOV de la caméra de profondeur (300), la caméra à lumière visible (200) étant configurée pour capturer une image de lumière visible, la caméra de profondeur (300) étant configurée pour capturer une image de profondeur, et l'image de lumière visible comprenant une région de chevauchement en chevauchement avec l'image de profondeur et une région de non-chevauchement non en chevauchement avec l'image de profondeur,
**caractérisé en ce que** le processeur est configuré pour exécuter une ou plusieurs instructions exécutables par ordinateur stockées dans la mémoire pour réaliser un procédé de traitement d'image tel que revendiqué dans l'une quelconque des revendications 1 à 10.
